# FASCICULE DE BREVET EUROPEEN

(11) **EP 3 061 979 B1**
(45) Date de publication et mention de la délivrance du brevet: **06.04.2022**
(21) Numéro de dépôt: 15189651.1
(22) Date de dépôt: 13.10.2015
(51) Int. Cl.: F16B 33/00, B60R 9/04, F16B 37/06

(54) **INSERT À SERTIR SUR UNE PIÈCE À FIXER SUR UN SUPPORT ET ENSEMBLE DE FIXATION COMPRENANT UN TEL INSERT**
EINSATZ ZUM BÖRDELN EINES WERKSTÜCKS, DAS AUF EINER HALTERUNG BEFESTIGT WERDEN SOLL, UND EINEN SOLCHEN EINSATZ UMFASSENDE BEFESTIGUNGSEINHEIT
INSERT TO BE CRIMPED ONTO A PART TO BE ATTACHED TO A MOUNTING AND ATTACHMENT ASSEMBLY COMPRISING SUCH AN INSERT

(30) Priorité: 27.02.2015 FR 1551718
(43) Date de publication de la demande: 31.08.2016
(73) Titulaire: Bollhoff Otalu, 73490 La Ravoire (FR)
(72) Inventeur: Chalvet, Franck, 73190 Saint Baldoph (FR); Mailland-Guillermin, Laurianne, 73100 Aix-les-Bains (FR); Fromont, Marc, 74960 Cran-Gevrier (FR)
(74) Mandataire: Talbot, Alexandre

(56) Documents cités:
- EP-A1- 1 389 691
- WO-A1-02/081936
- DE-U1-202012 008 057
- FR-A1- 2 569 792
- GB-A- 646 298

## Description

### Domaine technique de l'invention

L'invention concerne les inserts à sertir sur une pièce à fixer sur un support, plus particulièrement les écrous et les goujons, et les ensembles de fixation comprenant de tels inserts.

### État de la technique

Il existe des inserts à sertir pour fixer différents éléments de carrosserie ou d'accessoires extérieurs de carrosserie. Un insert à sertir comporte une tête d'appui et un tronçon de sertissage déformable par traction selon un axe longitudinal de l'insert, de manière à former un bourrelet de sertissage destiné à fixer l'insert à une pièce, en coinçant la pièce entre la tête d'appui de l'insert et le bourrelet de sertissage ainsi formé.

Par exemple, dans le secteur de l'automobile, on peut avoir besoin de fixer des barres sur le toit des véhicules, appelé également pavillon. Par ailleurs, il est nécessaire de garantir une étanchéité entre le pavillon et les inserts servant à fixer les barres, afin de protéger l'habitacle du véhicule. Actuellement, l'étanchéité entre les inserts et le pavillon est réalisée à l'aide d'une mousse à cellules fermées. Mais ces mousses ne sont pas adaptées pour résister à un appareil de lavage haute pression de l'ordre de 110 bars. Par ailleurs, pour améliorer l'étanchéité, on peut compresser la mousse, mais il y a un risque d'engendrer une déformation du pavillon. En outre, une telle déformation peut survenir facilement lorsque le pavillon a une épaisseur fine, c'est-à-dire inférieure à 1 mm, ce qui est notamment le cas pour les véhicules actuels qui sont de plus en plus légers afin de diminuer les émissions en dioxyde de carbone.

On peut citer la demande de brevet allemand DE 102007040041 qui divulgue un écrou à sertir en aveugle sur un élément de carrosserie, comprenant une tête d'appui prolongée par un tronçon de sertissage. Mais un tel écrou n'assure pas une étanchéité suffisante entre l'écrou et l'élément de carrosserie.

La demande de brevet américain US 2014/0097218 divulgue un écrou à sertir sur un rail, comportant une tête située contre un élément de compensation d'écart fixé par encliquetage dans un orifice d'un pavillon. L'élément de compensation permet de maintenir un écart spécifique entre le pavillon et une structure de renfort du pavillon. Mais l'étanchéité procurée par l'encliquetage de l'élément de compensation n'est pas non plus suffisante.

DE 20 2012 008057 U1 divulgue un insert selon le préambule de la revendication 1.

### Objet de l'invention

L'objet de l'invention consiste à pallier les inconvénients cités ci-avant, et en particulier à fournir un insert à sertir sur une pièce à fixer sur un support permettant d'assurer une étanchéité efficace entre l'insert et le support et qui soit simple à fabriquer.

Un autre objet de l'invention consiste à fournir un insert adapté pour fixer la pièce à un support dont l'épaisseur est particulièrement fine tout en garantissant une étanchéité entre l'insert et le support.

Selon un aspect de l'invention, il est proposé un insert à sertir sur une pièce à fixer sur un support, comprenant une tête d'appui et un tronçon de sertissage destiné à être déformé lors d'une opération de sertissage de l'insert sur la pièce à fixer.

L'insert comporte en outre un joint solidaire de la tête d'appui et destiné à coopérer avec le support de manière à fournir une étanchéité entre l'insert et le support.

Un tel insert permet de fournir une étanchéité entre l'insert et le support sans engendrer de déformations sur le support.

L'insert peut comprendre un tronçon taraudé pour recevoir une tige filetée.

En variante, l'insert comprend une tige filetée.

Le joint peut être moulé par injection sur la tête d'appui.

Le tronçon de sertissage fait saillie de la tête d'appui en s'étendant selon une première direction et le joint comporte plusieurs lèvres s'étendant selon une deuxième direction opposée à la première direction.

Une lèvre externe située à une périphérie du joint peut comporter une face interne inclinée selon un angle compris entre 40° et 50° par rapport à un axe longitudinal du tronçon de sertissage.

La lèvre externe peut également comporter une face externe inclinée selon un angle compris entre 120° et 125° par rapport à l'axe longitudinal.

Une lèvre interne peut comporter une face interne inclinée selon un angle compris entre 30° et 40° par rapport à l'axe longitudinal.

La lèvre interne peut comporter une face externe située parallèlement à l'axe longitudinal.

L'insert comprend une couronne faisant saillie du joint et s'étendant selon la première direction, la couronne étant destinée à fournir une étanchéité entre l'insert et la pièce à fixer.

La tête d'appui comprend un épaulement formant une jonction avec le tronçon de sertissage, et la couronne fait saille de l'épaulement.

La tête d'appui comprend une face opposée à l'épaulement, la face opposée délimitant une extrémité de l'insert, et ladite au moins une lèvre faisant saillie de la face opposée.

Selon un autre aspect de l'invention, il est proposé un ensemble de fixation pour fixer une pièce sur un support comprenant un insert tel que défini ci-avant, l'insert comprenant un tronçon taraudé, et l'ensemble de fixation comportant une tige filetée introduite dans le tronçon taraudé.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement une vue en perspective d'un mode de réalisation d'un insert à sertir selon l'invention ;
- la figure 2, illustre de façon schématique une vue en coupe de l'insert à sertir de la figure 1 ;
- la figure 3, illustre schématiquement une vue de dessous de l'insert à sertir de la figure 1 ;
- les figures 4 et 5, illustrent schématiquement des vues en coupe d'autres modes de réalisation d'un insert à sertir.

### Description détaillée

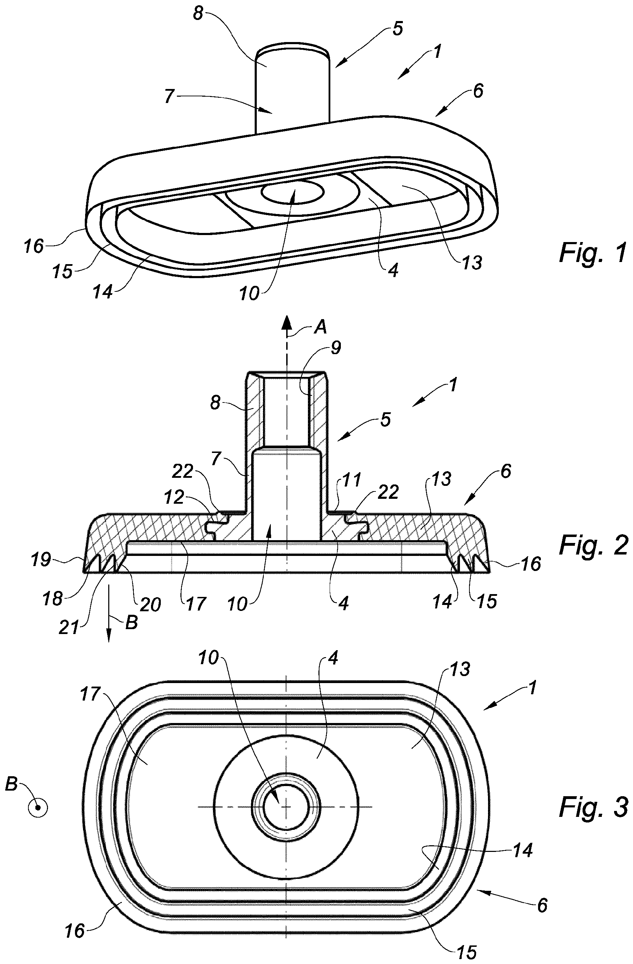

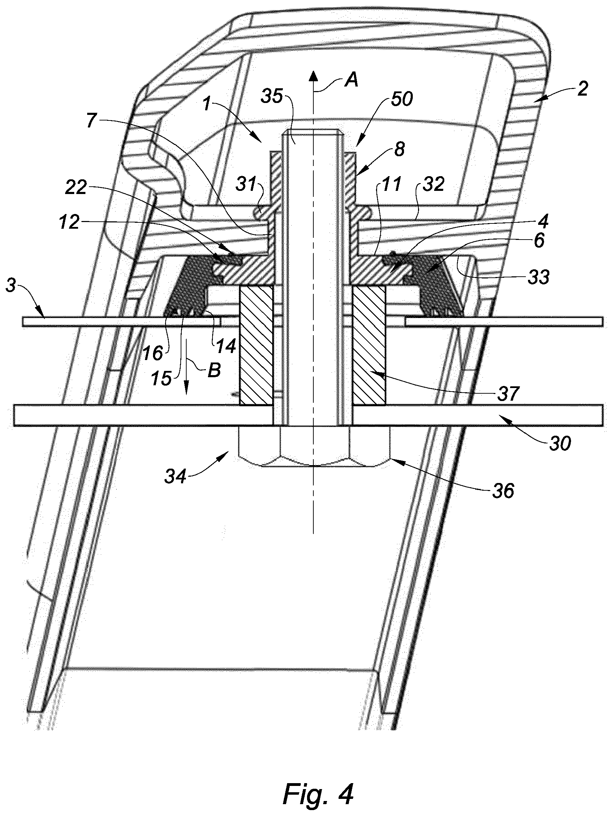

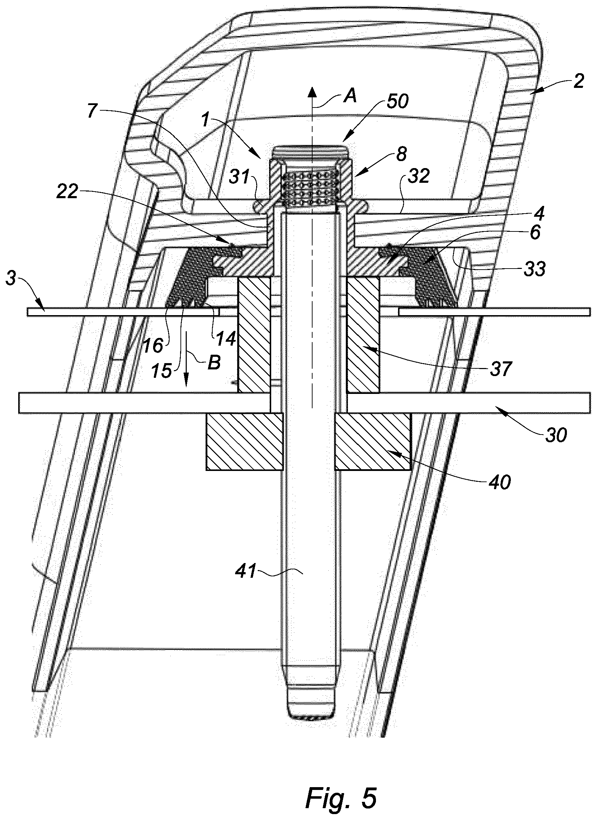

Sur les figures 1 à 3, on a représenté un insert 1 à sertir. L'insert 1 est destiné à être serti sur une pièce 2 à fixer sur un support 3, comme illustré aux figures 4 et 5. En d'autres termes, après sertissage de l'insert 1 sur la pièce 2, l'insert 1 permet de fixer la pièce 2 au support 3. La pièce 2 et le support 3 peuvent être en métal ou en matériau composite, comme des matériaux thermoplastiques et/ou thermodurcissables. L'insert 1 peut être un écrou ou un goujon. Un écrou est une pièce creuse taraudée, c'est-à-dire qui comporte un filetage interne, destinée à être fixée à une autre pièce filetée. Un goujon est une pièce pleine filetée, c'est-à-dire qui comporte un filetage externe.

L'insert 1 comporte une tête d'appui 4, un corps 5, et un joint 6. Le corps 5 est creux et a une forme cylindrique. On entend ici par cylindre, un solide limité par une surface cylindrique engendrée par une droite, notée génératrice, parcourant une courbe plane fermée, notée directrice, et deux plans parallèles coupant les génératrices. Le corps 5 s'étend depuis la tête d'appui 4 le long d'un axe longitudinal A de l'insert 1 selon une première direction. Le corps 5 comporte un tronçon de sertissage 7 destiné à être déformé lors d'une opération de sertissage de l'insert 1 sur la pièce 2. Le corps 5 peut également comporter un tronçon taraudé 8 situé à une extrémité du corps 5 opposée à celle où est située la tête d'appui 4. Dans ce cas l'insert 1 est un écrou. En d'autres termes, le tronçon de sertissage 7 est situé entre le tronçon taraudé 8 et la tête d'appui 4. Le tronçon taraudé 8 comporte un filetage interne 9 configuré pour recevoir une tige filetée. Plus particulièrement, la tête d'appui 4 comporte un orifice 10 coïncidant avec le creux du corps 5 de l'insert 1. L'insert 1 est de préférence en métal, par exemple en acier, inoxydable ou non, ou en aluminium. Avantageusement, la tête d'appui 4 et le corps 5 forment une seule pièce.

Le joint 6 est solidaire de la tête d'appui 4, c'est-à-dire qu'il est couplé mécaniquement avec la tête d'appui 4. En d'autres termes le joint 6, la tête d'appui 4 et le corps 5 forment un seul élément dont les parties sont maintenues ensembles sans l'intervention d'une pièce extérieure. Ainsi, on ne peut pas perdre le joint 6 lorsqu'on utilise l'insert 1. Le joint 6 est situé sur la tête d'appui 4. Il est destiné à coopérer avec le support 3 de manière à fournir une étanchéité entre l'insert 1 et le support 3, comme illustré aux figures 4 et 5. Le joint 6 est déformable lorsque la pièce à fixer 2 exerce une force de contrainte sur l'insert 1, ou inversement, afin de fournir l'étanchéité recherchée. Préférentiellement, le joint 6 est réalisé dans un matériau différent de celui de la tête d'appui 4 et du corps 5 de l'insert 1. De façon générale, le joint 6 est réalisé dans un matériau déformable, par exemple en élastomère thermoplastique oléfinique vulcanisé, ou en éthylène-propylène-diène monomère, ou en caoutchouc nitrile butadiène, ou en caoutchouc épichlorohydrine, ou encore en caoutchouc silicone polymère polysiloxane. Le joint 6 est surmoulé sur l'extrémité de la tête d'appui 4, c'est-à-dire que le joint 6 est formé par injection d'un fluide durcissable, tels que les plastiques précités, sur la tête d'appui 4. La tête d'appui 4 comporte un premier épaulement 11 qui fait office d'appui contre la pièce 2 pour sertir l'insert 1, et un deuxième épaulement 12 qui coopère avec le joint 6 pour le maintenir solidaire avec la tête d'appui 4. Ainsi, on évite le montage du joint 6 en ligne de production et on garantit la présence du joint 6 sur l'insert 1.

De manière générale, le joint 6 comporte une base 13 ayant une forme parallélépipédique et au moins une lèvre 14 à 16 s'étendant selon une deuxième direction B opposée à la première direction A. En d'autres termes, les lèvres 14 à 16 sont orientées parallèlement à l'axe longitudinale A de l'insert 1, et selon un sens opposé à celle du corps 5 de l'insert 1. Le joint 6 peut comprendre une seule lèvre 16, notée lèvre externe, pour alléger l'insert 1, ou plusieurs lèvres 14 à 16 pour améliorer l'étanchéité. Selon un mode de réalisation préféré, le joint 6 comporte trois lèvres 14 à 16, comme illustré aux figures 1 à 5. Les lèvres 14 à 16 font saillie d'une première face 17 de la base 13. Avantageusement, les lèvres 14 à 16 sont situées sur le bord externe de la première face 17 afin de dégager une zone autour de l'orifice 10 de la tête d'appui 4, notamment pour placer une entretoise contre la tête d'appui 4, comme illustré sur les figures 4 et 5. On dit également que les lèvres 14 à 16 sont situées à la périphérie du joint 6. Par exemple, chaque lèvre 14 à 16 a une forme de couronne continue entourant l'axe longitudinal A de l'insert 1, c'est-à-dire entourant l'orifice 10 de la tête d'appui 4. Sur les figures 1 à 5, le joint 6 comporte deux premières lèvres internes 14 et 15 et une troisième lèvre externe 16. La lèvre externe 16 est située sur la partie la plus externe de la périphérie, sur le bord de la première face 17. Plus particulièrement, la lèvre externe 16 comporte une face interne 18 inclinée selon un angle compris entre 40° et 50° par rapport à l'axe longitudinal A. La face interne 18 est située en regard de l'axe longitudinal A. La lèvre externe 16 peut en outre comprendre une face externe 19, opposée à la face interne 18, inclinée selon un angle compris entre 120° et 125° par rapport à l'axe longitudinal A. La face externe 19 est située en regard de l'extérieur par rapport à l'insert 1. En outre, les lèvres internes 14 et 15 ont, de préférence, des faces inclinées différemment par rapport à celles de la lèvre externe 16. Par exemple, chaque lèvre interne 14 et 15 peut avoir une face interne 20, c'est-à-dire une face située en regard de l'axe longitudinal A, inclinée selon un angle compris entre 30° et 40°, favorisant leur déformation vers l'extérieur pour créer un effet de plaquage contre le support 3 afin de fournir une étanchéité avec le support 3. Selon un autre exemple, chaque lèvre interne 14 et 15 peut comporter une face externe 21 située parallèlement à l'axe longitudinal. La face externe 21 d'une lèvre interne 14 et 15 est située en regard de l'extérieur ou encore en regard de la face interne 20, 18 d'une autre lèvre adjacente. La forme des lèvres permet aux lèvres 14 à 16 de se déformer sous un effort de 25 daN et assure une étanchéité efficace avec le support 3. Par ailleurs, la forme de la lèvre externe 16, décrite ci-avant, favorise une expansion prononcée vers l'extérieur car l'épaisseur de la lèvre externe 16 est inférieure à celles des lèvres internes 14 et 15. La déformation plus importante de la lèvre externe 16 permet au moins de garantir une étanchéité contre les poussières. La hauteur d'une lèvre 14 à 16 peut être égale au double de sa course de compression. La déformation des lèvres 14 à 16 est en outre favorisée par un espace situé entre deux lèvres adjacentes. Les lèvres 14 à 16 évitent ainsi de générer des forces de compression préjudiciables à l'intégrité du joint 6. Enfin, les lèvres 14 à 16 permettent de déformer le joint 6 sans créer d'efforts importants risquant d'endommager le support 3. Par ailleurs, une flexion du support 3 pourrait entraîner une perte d'étanchéité. Le joint 6 est donc particulièrement adapté pour des supports 3 qui n'acceptent pas une pression supérieure à 25 daN localement.

En outre, l'insert 1 peut comprendre une couronne 22 faisant saillie du joint 6 et s'étendant selon la première direction A, la couronne 22 étant destinée à fournir une étanchéité entre l'insert 1 et la pièce à fixer 2. La couronne 22 est située sur une deuxième face de la base 13, opposée à la première face 17.

Sur les figures 4 et 5, on a représenté deux modes de réalisation de l'insert 1 particulièrement adaptés pour fixer une barre 2 à un pavillon 3. La barre 2 correspond à la pièce à fixer 2 et le pavillon 3 correspond au support 3. On a également illustré sur les figures 4 et 5 un ensemble de fixation 50 comprenant un tel insert 1. Le pavillon 3 a, par exemple, une épaisseur fine, c'est-à-dire une épaisseur inférieure à 1 mm, de préférence comprise entre 0,5 et 1 mm, pour lequel l'insert 1 est particulièrement adapté. Le pavillon 3 peut en outre être fixé à un renfort 30. Dans les deux modes de réalisation, l'insert 1 est serti sur la barre 2. L'opération de sertissage consiste à introduire l'insert 1 dans un orifice de la barre 2, puis à déformer le tronçon de sertissage 7 selon l'axe longitudinal A. Le tronçon de sertissage 7 est configuré pour se déformer radialement par rapport à l'axe longitudinal A en un bourrelet de sertissage 31. On entend par radialement, toute direction située dans un plan perpendiculaire à l'axe longitudinal A. Le bourrelet de sertissage 31 vient au contact d'une première face 32 de la barre 2 pour sertir l'insert 1 à la barre 2. En d'autres termes, le bourrelet de sertissage 31 coince la barre 2 avec la tête d'appui 4, et plus particulièrement avec le premier épaulement 11, pour fixer l'insert 1 à la barre 2. Par exemple, la première face 32 de la barre 2 peut être inaccessible et on dit que l'insert 1 est monté en aveugle sur la barre 2. La tête d'appui 4 est destinée à venir au contact d'une deuxième face 33 de la barre 2 pour coincer la barre 2 avec le bourrelet de sertissage 31.

Sur la figure 4, on a représenté un mode de réalisation dans lequel l'insert 1 est un écrou destiné à coopérer avec une vis 34. La vis 34 comporte une tige filetée 35 et une tête de vis 36. Dans ce mode de réalisation, l'ensemble de fixation 50 comprend en outre la tige filetée 35 introduite dans le filetage interne 9 du tronçon taraudé 8 de l'insert 1. Afin de maintenir un écartement spécifique entre le pavillon 3 et le renfort 30, on peut placer une entretoise 37 entre la tête d'appui 4 et le renfort 30. L'entretoise 37 prend alors appui contre la tête d'appui 4. Puis, la vis 34 serre l'ensemble de fixation 50, par l'intermédiaire de la tête de vis 36 qui prend appui contre le renfort 30 pour coincer le renfort 30 entre l'entretoise 37 et la tête de vis 36.

Sur la figure 5, on a représenté un autre mode de réalisation dans lequel l'insert 1 est un goujon destiné à coopérer avec un écrou de blocage 40. Dans ce mode de réalisation, l'ensemble de fixation 50 comprend en outre une tige filetée 41 au niveau de ses deux extrémités. La tige filetée 41 peut être introduite dans le filetage interne 9 du tronçon taraudé 8 de l'insert 1, ou être fixée au corps 5 de l'insert 1 selon d'autres moyens. Puis, l'écrou de blocage 40 serre l'ensemble de fixation 50, en prenant appui contre le renfort 30 pour coincer le renfort 30 entre l'entretoise 37 et l'écrou de blocage 40.

Dans les deux modes de réalisation illustré aux figures 4 et 5, l'étanchéité fournie par le joint 6 est réalisée lors de la compression du joint 6, en particulier au niveau des lèvres 14 à 16 et de la couronne 22, par dissipation élastique du joint 6. En d'autres termes, on assure une étanchéité entre, d'une part le pavillon 3 et l'insert 1 à l'aide des lèvres 14 à 16 du joint 6, et d'autre part la barre 2 et l'insert 1 à l'aide de la couronne 22 du joint 6. En particulier, l'étanchéité entre la pièce 2 et l'insert 1 est améliorée par l'effort fourni par le sertissage. L'étanchéité entre le support 3 et l'insert 1 est assurée par la compression et la déformation des lèvres 14 à 16.

Un tel insert 1 permet de fournir une étanchéité suffisante, par exemple lorsque de l'eau est injectée sous une pression de 110 bars, avec une force de fixation d'environ 25 daN au point de fixation sur le pavillon 3.

L'invention qui vient d'être décrite permet de fournir un insert intégrant une interface de fixation et une zone d'étanchéité. Un tel insert est particulièrement adapté pour fixer une pièce sur un support, en fournissant une étanchéité avec le support sur lequel il est monté, sans déformer le support.

## Revendications

1. Insert à sertir sur une pièce (2) à fixer sur un support (3), comprenant :
- une tête d'appui (4),
- un tronçon de sertissage (7) destiné à être déformé lors d'une opération de sertissage de l'insert sur la pièce (2) à fixer, le tronçon de sertissage (7) faisant saillie de la tête d'appui (4) en s'étendant selon une première direction (A),
- un joint (6) solidaire de la tête d'appui (4) et destiné à coopérer avec le support (3) de manière à fournir une étanchéité entre l'insert et le support (3), le joint (6) comportant plusieurs lèvres (14 à 16) s'étendant selon une deuxième direction (B) opposée à la première direction (A) avec une lèvre externe située à la périphérie du joint (6),
**caractérisé en ce que** la tête d'appui (4) comporte un épaulement (11) formant une jonction avec le tronçon de sertissage (7) et une face opposée à l'épaulement (11), la face opposée délimitant une extrémité de l'insert, **en ce que** les lèvres (14 à 16) font saillie de la face opposée, et **en ce que** le joint (6) comporte une couronne (22) faisant saillie du joint (6) en s'étendant selon la première direction (A), la couronne (22) étant destinée à fournir une étanchéité entre l'insert et la pièce (2) à fixer, la couronne (22) faisant saillie de l'épaulement (11).

2. Insert selon la revendication 1, comprenant un tronçon taraudé (8) pour recevoir une tige filetée (35, 41).

3. Insert selon la revendication 1 ou 2, dans lequel le joint (6) est moulé par injection sur la tête d'appui (4).

4. Insert selon la revendication 1, dans lequel la lèvre externe (16) située à une périphérie du joint (6) comporte une face interne (18) inclinée selon un angle compris entre 40° et 50° par rapport à un axe longitudinal (A) du tronçon de sertissage (7).

5. Insert selon la revendication 4, dans lequel la lèvre externe (16) comporte une face externe (19) inclinée selon un angle compris entre 120° et 125° par rapport à l'axe longitudinal (A).

6. Insert selon la revendication 4 ou 5, dans lequel une lèvre interne (14, 15) comporte une face interne (20) inclinée selon un angle compris entre 30° et 40° par rapport à l'axe longitudinal (A).

7. Insert selon la revendication 6, dans lequel la lèvre interne (14, 15) comporte une face externe (21) située parallèlement à l'axe longitudinal (A).

8. Ensemble de fixation pour fixer une pièce (2) sur un support (3) comprenant un insert selon l'une des revendications 1 à 7, l'insert comprenant un tronçon taraudé (8), et l'ensemble de fixation comportant une tige filetée (35, 41) introduite dans le tronçon taraudé (8).

## Patentansprüche

1. Einsatz zum Bördeln auf einem Werkstück (2), das auf einer Haltung (3) zu befestigen ist, umfassend:
- einen Anlagekopf (4),
- einen Bördelabschnitt (7), der dazu bestimmt ist, bei einem Bördelvorgang des Einsatzes auf dem zu befestigenden Werkstück (2) verformt zu werden, wobei der Bördelabschnitt (7) von dem Anlagekopf (4) vorsteht, wobei er sich in einer ersten Richtung (A) erstreckt,
- eine Dichtung (6), die mit dem Anlagekopf (4) fest verbunden ist und dazu bestimmt ist, mit der Halterung (3) zusammenzuwirken, um eine Dichtheit zwischen dem Einsatz und der Halterung (3) herzustellen, wobei die Dichtung (6) mehrere Lippen (14 bis 16) umfasst, die sich in einer zweiten Richtung (B) entgegengesetzt zu der ersten Richtung (A) erstrecken, wobei eine äußere Lippe an der Peripherie der Dichtung (6) angeordnet ist,
**dadurch gekennzeichnet, dass** der Anlagekopf (4) eine Schulter (11) umfasst, die eine Verbindung zwischen dem Bördelabschnitt (7) und einer der Schulter (11) gegenüberliegenden Fläche bildet, wobei die gegenüberliegende Fläche ein Ende des Einsatzes begrenzt, dadurch, dass die Lippen (14 bis 16) von der gegenüberliegenden Fläche vorstehen, und dadurch, dass die Dichtung (6) eine Krone (22) umfasst, die von der Dichtung (6) vorsteht, wobei sie sich in der ersten Richtung (A) erstreckt, wobei die Krone (22) dazu bestimmt ist, eine Dichtheit zwischen dem Einsatz und dem zu befestigenden Werkstück (2) herzustellen, wobei die Krone (22) von der Schulter (11) vorsteht.

2. Einsatz nach Anspruch 1, umfassend einen Gewindeabschnitt (8), um einen Gewindestift (35, 41) aufzunehmen.

3. Einsatz nach Anspruch 1 oder 2, wobei die Dichtung (6) auf den Anlagekopf (4) spritzgegossen ist.

4. Einsatz nach Anspruch 1, wobei die äußere Lippe (16), die an einer Peripherie der Dichtung (6) angeordnet ist, eine Innenfläche (18) aufweist, die unter einem Winkel zwischen 40° und 50° in Bezug auf eine Längsachse (A) des Bördelabschnitts (7) geneigt ist.

5. Einsatz nach Anspruch 4, wobei die äußere Lippe (16) eine Außenfläche (19) aufweist, die unter einem Winkel zwischen 120° und 125° in Bezug auf die Längsachse (A) geneigt ist.

6. Einsatz nach Anspruch 4 oder 5, wobei eine innere Lippe (14, 15) eine Innenfläche (20) aufweist, die unter einem Winkel zwischen 30° und 40° in Bezug auf die Längsachse (A) geneigt ist.

7. Einsatz nach Anspruch 6, wobei die innere Lippe (14, 15) eine Außenfläche (21) aufweist, die parallel zu der Längsachse (A) angeordnet ist.

8. Befestigungseinheit zur Befestigung eines Werkstücks (2) auf einer Halterung (3), umfassend einen Einsatz nach einem der Ansprüche 1 bis 7, wobei der Einsatz einen Gewindeabschnitt (8) umfasst, und die Befestigungseinheit einen Gewindestift (35, 41) umfasst, der in den Gewindeabschnitt (8) eingeführt ist.

## Claims

1. Insert to be crimped onto a part (2) to be fixed onto a support (3), comprising
- a support head (4),
- a crimping section (7) designed to be deformed when a crimping operation of the insert onto the part (2) to be fixed is performed, the crimping section (7) being salient from the support head (4) extending in a first direction (A),
- a seal (6) securedly attached to the support head (4) and designed to cooperate with the support (3) so as to provide a sealing between the insert and the support (3), the seal (6) comprising several lips (14 to 16) extending in a second direction (B) opposite to the first direction (A) with an outer lip situated at the periphery of the seal (6),
**characterized in that** the support head (4) comprises a shoulder (11) forming a junction with the crimping section (7) and a face opposite the shoulder (11), the opposite face delineating an end of the insert, **in that** the lips (14 to 16) are salient from the opposite face, and **in that** the seal (6) comprises a crown (22) salient from the seal (6) and extending in the first direction (A), the crown (22) being designed to provide a sealing between the insert and the part (2) to be fixed, the crown (22) being salient from the shoulder (11).

2. Insert according to claim 1, comprising a tapped section (8) to receive a threaded rod (35, 41).

3. Insert according to claim 1 or 2, wherein the seal (6) is moulded by injection on the support head (4).

4. Insert according to claim 1, wherein the outer lip (16) situated at the periphery of the seal (6) comprises an inner face (18) inclined at an angle comprised between 40° and 50° with respect to a longitudinal axis (A) of the crimping section (7).

5. Insert according to claim 4, wherein the outer lip (16) comprises an outer face (19) inclined at an angle comprised between 120° and 125° with respect to the longitudinal axis (A).

6. Insert according to claim 4 or 5, wherein an inner lip (14, 15) comprises an inner face (20) inclined at an angle comprised between 30° and 40° with respect to the longitudinal axis (A).

7. Insert according to claim 6, wherein the inner lip (14, 15) comprises an outer face (21) parallel to the longitudinal axis (A).

8. Fixing assembly for fixing a part (2) onto a support (3), comprising an insert according to one of claims 1 to 7, the insert comprising a tapped section (8) and the fixing assembly comprising a threaded rod (35, 41) inserted in the tapped section (8).
